# EUROPÄISCHE PATENTSCHRIFT

(11) **EP 1 528 480 B1**
(45) Veröffentlichungstag und Bekanntmachung des Hinweises auf die Patenterteilung: **17.01.2007**
(21) Anmeldenummer: 04025603.4
(22) Anmeldetag: 28.10.2004
(51) Int. Cl.: G06F 13/40

(54) **Bussystem mit wenigen Steuerleitungen**
Bus system having few control lines
Système de bus avec peu de lignes de commande

(30) Priorität: 28.10.2003 DE 10350388
(43) Veröffentlichungstag der Anmeldung: 04.05.2005
(73) Patentinhaber: Micronas GmbH, 79108 Freiburg i. Br. (DE)
(72) Erfinder: Arendt, Steffen, 79194 Gundelfingen (DE); Witte, Franz, 79312 Emmendingen (DE)
(74) Vertreter: Göhring, Robert

(56) Entgegenhaltungen:
- US-A- 6 122 683
- US-A1- 2001 011 312
- US-A1- 2002 007 432
- US-A1- 2002 138 682
- US-B1- 6 233 641
- US-B1- 6 266 710

## Beschreibung

Die Erfindung bezieht sich auf ein Bussystem mit einem Bus gemäß den oberbegrifflichen Merkmalen des Patentanspruchs 1.

Ein solches Bussystem ist aus US 2001/011312 A1 bekannt.

Zur Übertragung von Daten zwischen zwei Einrichtungen dienen üblicherweise Bussysteme mit einem Bus, welcher Busschnittstellen zum Anschluss der Daten übertragenden Einrichtungen aufweist. Bei den meisten Bussystemen gibt es entweder eine starre Vorgabe, welche der angeschlossenen Einrichtungen als steuernde Buseinrichtung (master) und welche der Einrichtungen als dienende Buseinrichtung (slave) verwendet wird. Häufig verwendet wird auch eine spezielle aufwendige Steuerung mit sogenannten memory/DMA-Controllern (DMA: direct memory access).

In Computern werden Busse zur Übertragung von Daten zwischen verschiedenen Einrichtungen verwendet, wobei die Steuerung des Datenbusses von einer zentralen Recheneinrichtung (CPU) übernommen wird. Zum Steuern weist die zentrale Recheneinrichtung neben dem Datenbus zur Datenübertragung einen Adressbus zur Übertragung der Adresse derjenigen Einrichtung des Computers auf, zu welcher bzw. von welcher aus eine Datenübertragung über den Datenbus stattfinden soll. Außerdem gibt es Steuerleitungen, welche von der zentralen Recheneinrichtung zu den einzelnen Einrichtungen führen, um zu signalisieren, ob die entsprechende Einrichtung Daten über den Datenbus empfangen oder Daten über den Datenbus senden soll. Außerdem dienen die Steuerleitungen bzw. ein Steuerbus dazu, den Zeitpunkt der Übertragung über den Datenbus zu bestimmen. Es handelt sich somit um eine zentrale Steuerung der Datenübertragung über den Datenbus, bei welcher die zentrale Steuereinrichtung die Freigabe des Datenbusses für die einzelnen angeschlossenen Einrichtungen bewirkt.

Allgemein bekannt ist auch das Prinzip des sogenannten Handshaking, bei dem die einzelnen an einen Datenbus angeschlossenen Einrichtungen untereinander kommunizieren, wobei ebenfalls ein zentraler Prozessor eine Koordinierung des Datenzugriffs organisiert. Neben dem Datenbus zur Übertragung von Daten zwischen den einzelnen Einrichtungen gibt es zumindest drei Leitungen, welche als Steuerleitungen verwendet werden. Auf diesen werden üblicherweise sogenannte strobe-, acknowledge- bzw. interrupt-Signale übertragen. Aus Sicht des Prozessors erfolgt eine Dateneingabe zu diesem über den Datenbus hinweg dadurch, dass ein angeschlossenes Peripheriegerät die zu übertragenden Daten an den Leitungen des Datenbusses anlegt und mittels eines strobe-Signals dem Prozessor signalisiert, dass Daten zum Übertragen bereitliegen. Das interrupt-Signal auf der interrupt-Steuerleitung dient dazu, dem Peripheriegerät zu signalisieren, ob ein Eingangspuffer der empfangenden Einrichtung leer ist und somit weitere Daten an die Datenleitungen angelegt werden können. Sobald der Prozessor das Abholen der Daten aus dem Eingangspuffer veranlasst hat, wird das interrupt-Signal zurückgenommen und dem angeschlossenen Peripheriegerät somit signalisiert, dass eine erneute Datenübertragung durchgeführt werden kann.

Im Fall einer Datenausgabe von der Einrichtung mit dem Prozessor zu dem Peripheriegerät legt der Prozessor die Daten an den Datenleitungen des Datenbusses an und löst einen Schreibimpuls aus. Das Peripheriegerät quittiert das Abholen der Daten mit dem acknowledge-Signal, woraufhin durch das Rücksetzen des interrupt-Signals dem Prozessor signalisiert wird, dass der Datenbus für eine neue Übertragung bereitsteht. Auch bei dieser Anordnung erfolgt die Zuweisung des Datenbusses zur Übertragung von Daten zu den einzelnen angeschlossenen Einrichtungen somit von dem zentralen Prozessor aus.

Für die Verarbeitung von interrupts sind allgemein softwareund hardware-interrupts bekannt. Hardware-interrupts werden dabei an interrupt-Steuereinrichtungen gerichtet, welche auch eine Priorisierung verschiedener parallel zueinander eingehender Anfragen auf Zuteilung des Datenbusses ermöglichen.

Übliche Bussysteme weisen somit einen Datenbus, einen Adressbus und einen Steuerbus bzw. entsprechende Signalisierungsund Steuerleitungen auf.

Heutige Prozessorchips für eine digitale Signalverarbeitung bzw. deren zentrale Steuereinrichtungen sind üblicherweise mit einer großen Anzahl von Direktzugriffs-Speicherplätzen (RAM) auf dem Chip bzw. Die ausgebildet, so dass sie in einer möglichst neuartigen und teuren Verfahrensweise gefertigt werden müssen. Aus einer Vielzahl von Gründen ist es nicht sinnvoll, auf einem solchen Prozessordie eine Vielzahl von Schnittstellen zu integrieren. Für die Bereitstellung der Schnittstellen ist jedoch keine derart hochentwickelte Technologie erforderlich, wie für die Fertigung der Prozessordies. Auch mit Blick auf die Variabilität der Anforderungen bezüglich der speziellen Schnittstellen ist es sinnvoller, eine getrennte Schnittstelle bereitzustellen. Weitere Gründe liegen in Fertigungsparametern und Materialparametern, z. B. der Spannungsfestigkeit. Um einen Prozessorkern der Steuereinrichtung auf einem Prozessordie mit einer Schnittstelleneinrichtung, insbesondere einem Schnittstellenchip zu verbinden, wird ein Bus benötigt, der schnell ist, mit wenigen Leitungen auskommt, wenige o-verheads (Überlast) hat und verschiedene Arten von Übertragungen ermöglicht, beispielsweise Register und Speicher einzeln adressiert oder einen direkten Speicherzugriff (DMA) ermöglicht.

Die Aufgabe der Erfindung besteht darin, ein Bussystem mit einem Bus bereitzustellen, welcher insbesondere als Schnittstelle zwischen einem Prozessorkern mit üblichem Busanschluss und Schnittstelleneinrichtungen zu weiteren Systemeinrichtungen und Peripheriegeräten ausgebildet ist.

Diese Aufgabe wird durch einen Systembus mit den Merkmalen des Patentanspruchs 1 gelöst.

Vorteilhafte Ausgestaltungen sind Gegenstand abhängiger Ansprüche.

Nachfolgend wird ein Ausführungsbeispiel anhand der Zeichnung näher erläutert. Es zeigen:
- Fig. 1: eine Schaltungsanordnung eines Bussystems;
- Fig. 2: ein Zustandsdiagramm verschiedener Signale auf den Leitungen eines solchen 16-Bit-Bussystems für den Fall, dass eine externe Schnittstelle ein 32-Bit-Datenpaket sendet;
- Fig. 3: ein solches Zustandsdiagramm für den Fall, dass die externe Schnittstelle weitere Daten sendet;
- Fig. 4: ein Zustandsdiagramm für den Fall, dass die externe Schnittstelle Daten sendet und dabei durch die andere Schnittstelle unterbrochen wird;
- Fig. 5: ein Zustandsdiagramm für den Fall, dass die externe Schnittstelle Daten anfordert;
- Fig. 6: ein Zustandsdiagramm für den Fall, dass die externe Schnittstelle Daten anfordert, wobei eine Verlangsamung durch den regulären Bus zwischen der anderen Schnittstelle und dem Prozessorkern erfolgt;
- Fig. 7: ein Zustandsdiagramm für den Fall, dass die externe Schnittstelle Daten anfordert und nicht unterbrochen wird;
- Fig. 8: ein Zustandsdiagramm für den Fall, dass die interne bzw. andere Busschnittstelle Daten in einen Bereich für die externe Schnittstelle schreibt;
- Fig. 9: ein Zustandsdiagramm für den Fall, dass die interne Busschnittstelle aus einem externen Registerbereich liest; und
- Fig. 10: schematisch eine der Bussteuereinrichtung zur Umsetzung von Adressen eines Adressbusses zwischen einem Systembus und dem Schnittstellenbus.

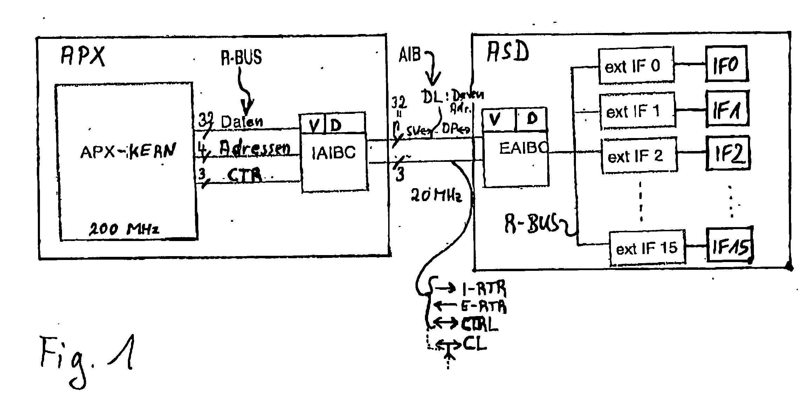

Fig. 1 stellt einzelne Funktionselemente dar, welche für das Verständnis des nachfolgend beschriebenen Bussystems hilfreich sind. Eine Umsetzung auf andere Bussysteme, insbesondere eine Verwendung von mehr oder weniger Daten- und Steuerleitungen, ist durch entsprechende Umgestaltung möglich.

Beim dargestellten Ausführungsbeispiel soll eine Datenübertragung zwischen einem Prozessorkern APX-KERN einer Prozessoreinrichtung APX zu einer Vielzahl verschiedener Schnittstelleneinrichtungen IF0, IF1, IF2, ... IF15 durchgeführt werden. In üblicher Art und Weise weist der Prozessorkern APX-KERN dazu einen üblichen Bus R-BUS mit Daten-, Adress- und Steuerleitungen auf.

Zusätzlich zu dem Prozessorkern APX-KERN, welcher beispielsweise mit 200 MHz getaktet wird, befindet sich auf dem Die oder Chip des Prozessors APX eine Busschnittstelle IAIBC, in welcher der herkömmliche Bus R-BUS des Prozessors APX endet. Die Busschnittstelle IAIBC, welche nachfolgend zur einfacheren Unterscheidbarkeit als interne Busschnittstelle bzw. interne Bussteuereinrichtung IAIBC bezeichnet wird, setzt in bidirektionaler Richtung die Signale von dem herkömmlichen Bus R-BUS auf einen Bus um, der nachfolgend zur einfacheren Unterscheidbarkeit als weiterentwickelter Schnittstellenbus AIB (Advanced Interface Bus) bezeichnet wird.

Über den Schnittstellenbus AIB, der eine möglichst geringe Anzahl von Steuerleitungen aufweist, werden die zu übertragenden Daten von bzw. zu einer weiteren Busschnittstelle bzw. Bussteuereinrichtung EAIBC geleitet, welche zu Zwecken der Unterscheidbarkeit als externe Bussteuereinrichtung bzw. Busschnittstelle EAIBC bezeichnet wird. Die externe Busschnittstelle EAIBC dient als Schnittstelle zwischen dem Schnittstellenbus AIB und den weiteren Extern-Schnittstelleneinrichtungen IFO - IF15, die als Schnittstellen zu externen Einrichtungen ausgebildet sind. Diese weitere Busschnittstelle EAIBC und die weiteren Extern-Schnittstelleneinrichtungen IFO - IF15 befinden sich wiederum auf einem Chip oder einer Platine als Extern-Schnittstellenanordnung ASD. An die weiteren Extern-Schnittstelleneinrichtungen IFO - IF15 können übliche Einrichtungen beispielsweise eines Computers oder externe Peripheriegeräte in für sich bekannter Art und Weise angeschlossen werden, um mit dem zentralen Prozessor APX und dessen Prozessorkern APX-KERN zu kommunizieren. Die Kommunikation findet dabei über den zwischengeschalteten Schnittstellenbus AIB mit beispielsweise 20 MHz statt.

Dieser Schnittstellenbus AIB besteht beim dargestellten Beispiel aus n Datenleitungen mit z. B. n = 16 und zumindest drei Steuerleitungen I-RTR, E-RTR, CTRL. Während über die zumindest eine, vorzugsweise mehreren parallelen Datenleitungen Daten und Adressen übertragen werden, werden über die Steuerleitungen Steuersignale übertragen, welche eine Selbstarbitrierung (einen selbst zuteilenden Zugriff) auf den Schnittstellenbus AIB ermöglichen. Dabei können die Busschnittstellen IAIBC, EAIBC gleichberechtigt auf den Bus zugreifen. Über die drei Steuerleitungen werden ein Lesebereitschaftssignal IAIBC-RTR der internen Bussteuereinrichtung bzw. Busschnittstelle IAIBC, ein Lesebereitschaftssignal EAIBC-RTR der externen Bussteuereinrichtung EAIBC bzw. ein Steuersignal CTR übertragen.

Mit dem Steuersignal CTR werden insbesondere die Informationen bzw. Daten, die über den Schnittstellenbus AIB über die Datenleitungen übertragen werden, als payload (Nutzdaten) oder Steuerdaten bzw. Steuerworte SW identifiziert. Mit anderen Worten signalisiert das Steuersignal CTR, ob über die Datenleitungen bzw. den Datenbus DL momentan eigentliche Nutzdaten oder ein solche Nutzdaten ankündigendes oder anforderndes Steuerwort SW übertragen werden.

Um die Zugriffszeitpunkte derart zu definieren, dass keine Kollision durch gleichzeitigen Zugriff beider Bussteuereinrichtungen IAIBC, EAIBC auf den Schnittstellenbus AIB erfolgt, wird durch die Bussteuereinrichtungen IAIBC, EAIBC der Bustakt CL verwendet. Zur Arbitrierung des Schnittstellenbusses AIB werden dabei die verschiedenen Taktflanken des Taktes CL verwendet.

Bei der dargestellten Ausführungsform darf die interne Bussteuereinrichtung IAIBC immer dann auf den Schnittstellenbus AIB zugreifen, wenn eine fallende Taktflanke des Bustaktes CL vorliegt. Die externe Bussteuereinrichtung EAIBC darf entsprechend immer dann auf den Schnittstellenbus AIB zugreifen, wenn eine steigende Taktflanke des Bustaktes CL vorliegt. Alternativ oder zusätzlich kann auch der Zustand des Bustaktes als Kriterium herangezogen werden, d. h. ob das Taktsignal sich im niedrigen oder hohen Zustand befindet.

Für einen solchen Schnittstellenbus AIB ist ein einfaches Busprotokoll verwendbar. Beispielhaft kann das Busprotokoll auf den nachfolgenden Grundprinzipien beruhen.

Wenn das Lesebereitschaftssignal IAIBC-RTR der internen Bussteuereinrichtung IAIBC sich im Zustand "hoch" befindet und in diesem Zustand "hoch" über die entsprechende Steuerleitung I-RTR zu der externen Bussteuereinrichtung EAIBC übertragen wird, wird der externen Bussteuereinrichtung EAIBC dadurch signalisiert, dass die interne Bussteuereinrichtung IAIBC zum Empfangen eines Steuerbefehls bereit ist. Dieses Lesebereitschaftssignal IAIBC-RTR wird durch die interne Bussteuereinrichtung IAIBC erzeugt und an der ersten der Steuerleitungen I-RTR angelegt. Das Steuersignal bzw. Lesebereitschaftssignal IAIBC-RTR darf von der internen Bussteuereinrichtung IAIBC gemäß diesem Ausführungsbeispiel stets zum Zeitpunkt der fallenden Flanke des Taktes CL des Schnittstellenbusses AIB geändert werden. Alternativ wäre beispielsweise gemäß einem anderen Busprotokoll auch zulässig, dass die Änderung in dem Zustand "tief" des Taktes CL vorgenommen werden darf.

Von der externen Bussteuereinrichtung EAIBC wird das entsprechende Lesebereitschaftssignal EAIBC-RTR erzeugt und an der zweiten Steuerleitung E-RTR des Schnittstellenbusses AIB angelegt. Dieses Lesebereitschaftssignal EAIBC-RTR dient dazu, der internen Bussteuereinrichtung IAIBC zu signalisieren, dass die externe Bussteuereinrichtung EAIBC zum Empfang eines Steuerworts oder von Daten bereit ist, wenn das Lesebereitschaftssignal EAIBC-RTR sich im Zustand "hoch" befindet. Dieses Lesebereitschaftssignal EAIBC-RTR darf durch die externe Bussteuereinrichtung EAIBC gemäß dem bevorzugten Ausführungsbeispiel jeweils zusammen mit der ansteigenden Flanke des Taktes CL des Schnittstellenbusses AIB geändert werden. Entsprechend ist auch hier beispielsweise alternativ zulässig, Änderungen dieses Signals während des Zustandes "hoch" des Taktes CL vorzunehmen.

Der Steuerbefehl bzw. das Steuersignal CTR kann von beiden Bussteuereinrichtungen IAIBC, EAIBC über die entsprechende dritte Steuerleitung CTRL gesendet werden. Im Normalzustand befindet sich das Steuersignal im Zustand "tief". Wenn eine der Bussteuereinrichtungen IAIBC, EAIBC einen Steuerbefehl CTR aussenden will, setzt sie das Steuersignal CTR kurzzeitig oder längerfristig in den Zustand "hoch". Um eine Kollision zu vermeiden, wird außerdem festgelegt, dass jeweils nur die Bussteuereinrichtung IAIBC oder EAIBC einen Steuerbefehl CTR aktivieren darf, deren Lesebereitschaftssignal IAIBC-RTR bzw. EAIBC-RTR sich im Zustand "tief" befindet.

Der Zeitpunkt zum Hochsetzen des Zustands des Steuersignals CTR fällt zur Vermeidung von Kollisionen z.B. mit dem Zeitpunkt zusammen, zu dem die entsprechende Bussteuereinrichtung IAIBC bzw. EAIBC auch den Zustand ihres Lesebereitschaftssignals IAIBC-RTR bzw. EAIBC-RTR ändern darf.

Beim bevorzugten Ausführungsbeispiel senden beide Bussteuereinrichtungen IAIBC, EAIBC das Steuersignal CTR und ein zugeordnetes Steuerwort SW jeweils bei einer steigenden Flanke des Taktes CL aus. Entsprechend darf die interne Bussteuereinrichtung IAIBC einen Steuerbefehl CTR bei einer steigenden Flanke des Taktes CL des Schnittstellenbusses AIB aussenden. Die externe Bussteuereinrichtung EAIBC darf einen Steuerbefehl CTR zusammen mit der ansteigenden Flanke des Taktes CL des Schnittstellenbusses AIB erzeugen.

Als weiteres vorteilhaftes Prinzip des bevorzugten Busprotokolls wird definiert, dass das entsprechende Lesebereitschaftssignal IAIBC-RTR oder EAIBC-RTR im Zustand "tief" verbleibt, falls nach dem Steuerwort SW bzw. Steuerbefehl CTR Daten oder weitere Daten übertragen werden sollen. Dadurch kann durch das Hochsetzen des Zustands des Lesebereitschaftssignals IAIBC-RTR bzw. EAIBC-RTR der jeweils anderen Bussteuereinrichtung EAIBC bzw. IAIBC das Ende der Datenübertragung signalisiert werden.

Im Ruhezustand des Schnittstellenbusses AIB sind somit beide Lesebereitschaftssignale IAIBC-RTR und EAIBC-RTR im Zustand "hoch", also beide Bussteuereinrichtungen IAIBC und EAIBC, empfangsbereit. Möchte eine der beiden Bussteuereinrichtungen IAIBC, EAIBC den Schnittstellenbus AIB als steuernde Einrichtung bzw. master beanspruchen, setzt diese Bussteuereinrichtung IAIBC, EAIBC ihr Lesebereitschaftssignal IAIBC-RTR bzw. EAIBC-RTR in den Zustand "tief". Um Arbitrierungsprobleme zu vermeiden, wechselt dabei die interne Bussteuereinrichtung IAIBC ihren Zustand des Lesebereitschaftssignals IAIBC-RTR bei steigender Taktflanke des Taktes CL, während die externe Bussteuereinrichtung EAIBC den Zustand ihres Lesebereitschaftssignals EAIBC-RTR bei fallender Taktflanke des Takts CL wechselt. Auf einfache Art und Weise werden somit Buskonflikte vermieden. Insbesondere auf dieser Basis sind verschiedenartige Busprotokolle aufbaubar. Für verschiedene Situationen werden nachfolgend beispielhafte Abläufe anhand der weiteren Figuren beschrieben.

Dabei wird vorzugsweise vor jeder neu initiierte Datentransfer zuvor durch ein Steuerwort SW auf den Datenleitungen DL und ein Steuerbefehl CTR auf der Steuerleitung CTRL angekündigt. In dem Steuerwort SW kann insbesondere die Art des Transfers, z. B. zu einem Register, Speicher, gemäß DMA (Direct Memory Access), aber auch die Richtung, z. B. ob zu lesen oder zu schreiben ist, und/oder die Nummer bzw. Adresse der adressierten Extern-Schnittstelleneinrichtung IFO - IF15 angekündigt werden.

Zweckmäßigerweise wird das Steuerwort SW mit der Steuerleitung als solches gekennzeichnet. Dadurch kann dann z. B. ein Lesebefehl von der diesen empfangenden Bussteuereinrichtung IAIBC, EAIBC ignoriert oder verzögert werden, um selber einen Steuerbefehl mit höherer Priorität abzusetzen.

Besonders bevorzugte Ausführungsformen weisen somit einen Schnittstellenbus AIB mit drei oder vier Steuerleitungen auf. Im Fall von drei Steuerleitungen werden diese zur Übertragung der beiden Lesebereitschaftssignale IAIBC-RTR, EAIBC-RTR und des Taktes CL des Schnittstellenbusses AIB verwendet, wobei das Übertragen des Steuersignale CTR ganz entfällt oder ebenfalls über ein entsprechend kodiertes Steuerwort SW auf den Datenleitungen erfolgt. Bei einer Ausführungsform mit vier Steuerleitungen werden für die Übertragung des Steuersignals CTR und die Übertragung des Taktes CL des Schnittstellenbusses AIB jeweils eigene Steuerleitungen zur Verfügung gestellt. Das Taktsignal CL hat somit die Funktion eines Steuersignals.

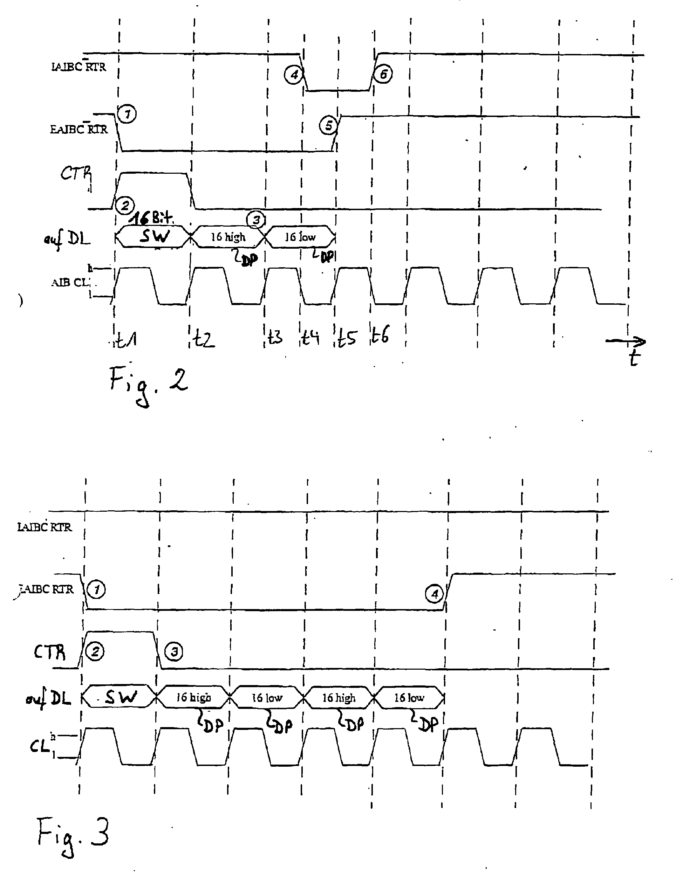

Das in Fig. 2 dargestellte Zustandsdiagramm ist beispielhaft für den Fall eines direkten Speicherzugriffs gemäß DMA (Direct Memory Access) seitens einer der Extern-Schnittstelleneinrichtungen IF0 auf einen Speicher im Bereich des zentralen Prozessors APX. Vorzugsweise weist jede der Extern-Schnittstelleneinrichtungen IF0-IF15 eine DMA-Anforderungsleitung auf. Um eine DMA-Übertragung zu starten, sendet die Extern-Schnittstelleneinrichtung IFO eine DMA-Anforderung an die externe Bussteuereinrichtung EAIBC über entsprechende direkte Anschlussleitungen oder einen regulären bzw. herkömmlichen Bus R-BUS. Die Übertragung der Anforderung über den Schnittstellenbus AIB erfolgt daraufhin gemäß dem nachfolgend beschriebenen Schema.

Im Falle eines gewünschten Beschreibens des zentralen Speichers (DMA-write), d. h. die Extern-Schnittstelleneinrichtung IFO will Daten in den zentralen Speicher schreiben, sendet die Extern-Schnittstelleneinrichtung IFO eine DMA-Anforderung an die externe Bussteuereinrichtung EAIBC. Im Fall von mehr als einer gleichzeitigen derartigen Anforderung entscheidet die externe Bussteuereinrichtung, welche der Anforderungen die höchste Priorität hat. Die anderen Anforderungen werden in eine Warteschlange eingereiht oder zurückgewiesen. Die externe Bussteuereinrichtung IAIBC kodiert die Nummer bzw. Adresse der Extern-Schnittstelleneinrichtung IF0 und überträgt diese in einem Steuerwort SW über den Schnittstellenbus AIB. Die Übertragung erfolgt dabei vorzugsweise gemäß den vorstehend beschriebenen Vorgaben.

Die interne Bussteuereinrichtung AIBC tastet das empfangene Steuerwort SW nach der Nummer der Extern-Schnittstelleneinrichtung IFO ab und überprüft, ob es eine Lese- oder Schreib-Anforderung ist. Falls die Anforderung in Form eines Steuerwortes SW oder Steuerbefehls als eine Schreib-Anforderung kodiert ist, wird abgewartet, bis vorzugsweise 32-Daten-Bits bereitstehen, um diese dem Prozessorkern APX-KERN zu übertragen und an dessen Eingangsport bzw. dem R-BUS anzulegen. Danach sendet die interne Bussteuereinrichtung IAIBC eine DMA-Anforderung aus und gibt die über den Schnittstellenbus AIB empfangenen Daten auf den regulären Bus R-BUS zum Prozessorkern APX-KERN, falls der Bus dafür vom Prozessorkern freigegeben wurde.

In Fig. 2, wie auch in den folgenden Figuren mit Darstellungen von Zustandsdiagrammen, ist in der obersten Zeile das Empfangs- bzw. Lesebereitschaftssignal IABC-RTR der internen Steuereinrichtung IAIBC dargestellt. In der zweiten Zeile ist das Empfangs- bzw. Lesebereitschaftssignal EAIBC-RTR der externen Steuereinrichtung EAIBC dargestellt. In der mittleren Zeile ist das Steuersignal CTR dargestellt, welches auf einer der Steuerleitungen CTRL in bidirektionaler Richtung übertragen wird. Darunter ist der Fluss von Daten, insbesondere Datenpaketen mit vorzugsweisen 16-Bit Dateninformation pro Datenpaket, und der Fluss von Steuerworten SW dargestellt. Darunter dargestellt ist in der letzten Zeile der Bustakt CL des Schnittstellenbusses AIB, der von einer der beteiligten Einrichtungen oder extern erzeugt und an die Bussteuereinrichtungen AIBC, EAIBC angelegt wird. Die dargestellten Signale IAIBC-RTR, EAIBC-RTR, CTR und CL befinden sich jeweils in dem Zustand "hoch" h oder "tief" 1, wobei diese Zustände in nach rechts dargestellt zeitlich fortschreitender Abfolge wechseln können.

Fig. 2 stellt den zeitlichen Signalablauf dar, wenn eine Extern-Schnittstelleneinrichtung IFO ein Datenpaket zu dem Prozessorkern APX-KERN sendet. Einleitend befinden sich die beiden Lesebereitschaftssignale IAIBC-RTR, EAIBC-RTR im Zustand "hoch". Beide Bussteuereinrichtungen befinden sich somit im Zustand der Empfangs- bzw. Lesebereitschaft. Das Steuersignal befindet sich im Zustand "tief" und eine Datenübertragung findet nicht statt. Zu einem ersten Zeitpunkt t1 liegt an der externen Busschnittstelle EAIBC eine DMA-Schreibanforderung an. Zum Zeitpunkt t1 der ansteigenden Flanke des Taktes CL wechselt die externe Bussteuereinrichtung EAIBC den Zustand ihres Lesebereitschaftssignals EAIBC-RTR zu "tief" (1)-(5). Da sich der Zustand des Lesebereitschaftssignals IAIBC-RTR der internen Bussteuereinrichtung IAIBC im "hohen" Zustand befindet, d. h. diese empfangsbereit ist, sendet die externe Bussteuereinrichtung EAIBC außerdem ein Steuersignal bzw. einen Steuerbefehl CTR (2) auf der Steuerleitung CTRL durch Hochsetzen von deren Zustand zum Zeitpunkt t1 der ansteigenden Taktflanke des Taktes CL. Zugleich wird ein eigentliches Steuerwort SW über eine der Datenleitungen DL von der externen Bussteuereinrichtung EAIBC zur internen Bussteuereinrichtung IAIBC gesendet. Entsprechend dem bevorzugten Datenformat folgen dem Steuerwort SW, welches vorzugsweise eine Länge von 16-Bit aufweist, eines oder mehrere Datenworte bzw. Datenpakete DP mit jeweils 16-Bit Dateninformationen (3) zu den Zeitpunkten t2, t3 der nächsten ansteigenden Taktflanken. Das Steuersignal CTR wird dazu wieder in den Zustand tief gesetzt, damit die Zustände bzw. Informationen auf den Datenleitungen DL von der empfangenden internen Bussteuereinrichtung IAIBC als Daten, d.h. Nutzdaten erkannt werden.

Optional kann die externe Bussteuereinrichtung EAIBC die Übertragung auch herunterbremsen oder unterbrechen, wenn die interne Bussteuereinrichtung IAIBC sich zu einem späteren Zeitpunkt t4 nicht im Zustand der Empfangsbereitschaft befindet, d. h. das Lesebereitschaftssignal IAIBC-RTR der internen Bussteuereinrichtung in IAIBC sich im Zustand "tief" befinden sollte (4), bis eine erneute Empfangsbereitschaft der internen Steuereinrichtung IAIBC durch entsprechendes Hochsetzen von deren Lesebereitschaftssignal IAIBC-RTR zu einem späteren Zeitpunkt t6 signalisiert wird (6).

Bei dem dargestellten Beispiel kann die interne Bussteuereinrichtung IAIBC Daten nicht unmittelbar über den regulären Bus R-BUS zum Prozessorkern APX-KERN übertragen und signalisiert dies durch das Stopsignal, d. h. zeitweiliges Heruntersetzen des Lesebereitschaftssignals IAIBC-RTR. Im vorliegenden Fall ist dies ohne Wirkung, da die externe Bussteuereinrichtung EAIBC keine weiteren Datenpakete DP zu übersenden hat. Soll eine Prioritätssteuerung vorgesehen werden, so ist dies durch das Übertragen entsprechender Parameter und Anweisungen in dem Steuerwort SW möglich.

Fig. 3 zeigt den Fall, dass z.B. die erste Extern-Schnittstelleneinrichtung IFO zwei oder mehr Datenpakete sendet und dabei nicht durch eine Verzögerung auf dem zentralen Bus R-BUS zum Prozessorkern APX-KERN oder andere Übertragungen, beispielsweise von oder zu anderen Extern-Schnittstelleneinrichtungen IF1 - IF15, verzögert oder unterbrochen wird. Entsprechend befindet sich das Lesebereitschaftssignal IAIBC-RTR der internen Bussteuereinrichtung IAIBC durchgehend im Zustand "hoch". Die externe Bussteuereinrichtung EAIBC kann entsprechend beim Anlegen einer Übertragungsanforderung von der Extern-Schnittstelleneinrichtung IF0 beim nächsten ansteigenden Wechsel des Taktes CL in den Zustand "hoch" in die Lesebereitschaft, d. h. den Lesebereitschaftssignalzustand "tief" gehen (1).

Zur Ankündigung der Übertragung eines Steuerwortes SW wird außerdem für eine Taktperiode das Steuersignal CTR in den Zustand "hoch" versetzt (2), (3). Außerdem wird zugleich das Steuerwort SW auf die Datenleitungen DL des Schnittstellenbusses AIB gesetzt. Da das Steuerwort SW zugleich eine Adressinformation enthält oder enthalten kann, dienen die Datenleitungen DL zugleich auch als Adressleitungen.

Beim dargestellten Ausführungsbeispiel werden nachfolgend über die nächsten vier Taktperioden des Taktes CL über eine der Datenleitungen nach dem Steuerwort SW vier Datenpakete DP mit je 16-Bit Dateninformation übertragen. Die Dateninformationen der einzelnen Bit oder, wie dargestellt, Datenpakete DP können dabei als Basiszustand durchgehend "hoch", "tief" oder, wie dargestellt, abwechselnd "hoch" und "tief" codiert werden. Nach der Übertragung aller zugeführten Datenpakete DP oder Daten setzt die externe Bussteuereinrichtung EAIBC ihr Lesebereitschaftssignal EAIBC-RTR mit der nächsten ansteigenden Taktflanke des Taktes CL wieder in den Zustand "hoch" (4), ist somit selber wieder für Übertragungen von der internen Bussteuereinrichtung IAIBC aus empfangsbereit. Die Übertragung stoppt somit automatisch in dem Moment, in dem keine weiteren Daten zu übertragen sind. Somit wird zugleich der Schnittstellenbus AIB für erneute Datenübertragungen und einen Zugriff durch eine der beiden Bussteuereinrichtungen IAIBC oder EAIBC freigegeben.

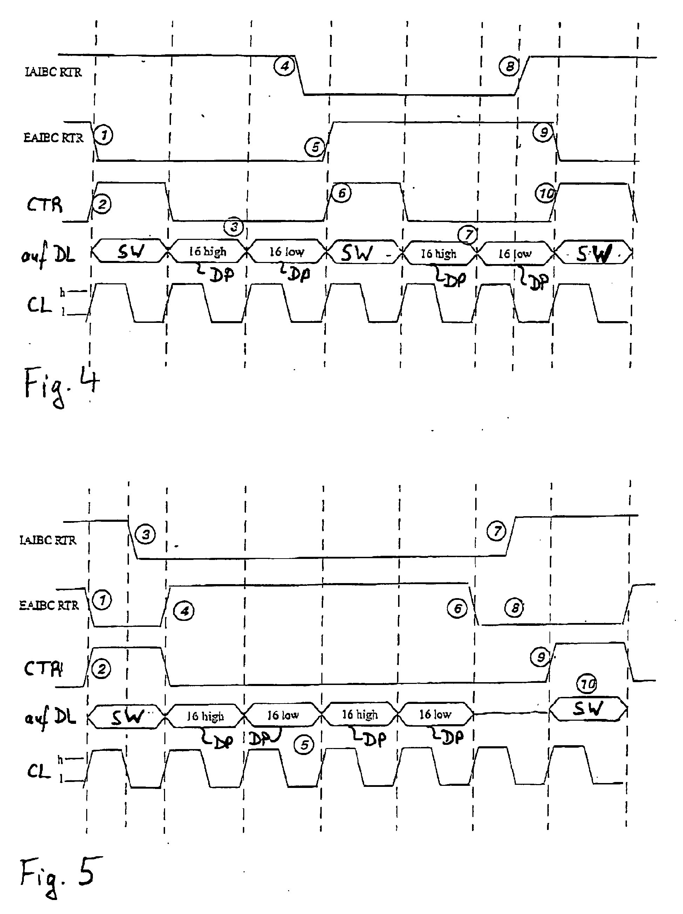

Fig. 4 stellt die Situation dar, in der die Extern-Schnittstelleneinrichtung IFO Daten sendet, dabei aber durch die interne Bussteuereinrichtung IAIBC unterbrochen wird. Ausgehend von dem Zustand der Lesebereitschaft sowohl der internen als auch der externen Bussteuereinrichtung IAIBC, EAIBC wird mit der ansteigenden Taktflanke beim Vorliegen von zu übertragenden Daten in der externen Bussteuereinrichtung EAIBC durch diese die Übertragung eingeleitet. Dazu wird bei ansteigender Taktflanke des Taktes CL das Lesebereitschaftssignal EAIBC-RTR der externen Bussteuereinrichtung EAIBC in den Zustand "tief" gesetzt (1), ein Steuersignal CTR über die Steuerleitung CTRL für eine Taktperiode aktiviert (2)-(3) und ein erstes Steuerwort SW auf den Schnittstellenbus AIB bzw. auf dessen zumindest eine Datenleitung gesetzt. Bevorzugt wird dabei eine Ausführungsform mit einem Schnittstellenbus, welcher 16 Datenleitungen DL aufweist, so dass pro Taktperiode, wie dies dargestellt ist, jeweils ein Steuerwort SW oder ein vollständiges Datenpaket DP übertragen werden kann.

Nach der Übertragung des Steuerwortes SW und von zwei Datenpaketen DP stellt die externe Bussteuereinrichtung EAIBC fest, dass die interne Bussteuereinrichtung IAIBC eine halbe Taktperiode des Taktes CL zuvor das Lesebereitschaftssignal IAIBC-RTR in den Zustand "tief" gesetzt hat (4), somit nicht empfangsbereit ist. Die externe Bussteuereinrichtung EAIBC kann daraufhin die Übertragung weiterer Daten unterbrechen oder verzögern. Zweckmäßigerweise geht die externe Bussteuereinrichtung EAIBC in den Zustand "hoch" (5), um der internen Bussteuereinrichtung IAIBC Empfangsbereitschaft zu signalisieren. So kann die interne Bussteuereinrichtung IAIBC mit der nächsten ansteigenden Taktflanke des Taktes CL ihrerseits ein Steuersignal CTR für eine Taktperiode aktivieren (6) und zugleich ein Steuerwort SW auf die Datenleitungen DL des Schnittstellenbusses AIB setzen. Bei den folgenden Takten setzt die interne Bussteuereinrichtung IAIBC Datenpakete DP auf die Datenleitungen DL. Das Steuerwort SW und die Datenpakete DP werden dann von der externen Bussteuereinrichtung EAIBC empfangen, ausgewertet und den entsprechenden Extern-Schnittstelleneinrichtungen zugeführt (7).

Eine halbe Taktperiode nach dem Absenden des letzten Datenpaketes bzw. mit der nächsten fallenden Taktflanke des Taktes CL nach dem Absenden des letzten vorliegenden Datenpaketes DP setzt die interne Bussteuereinrichtung IAIBC ihr Lesebereitschaftssignal IAIBC-RTR wieder in den Zustand "hoch" und ist damit wieder empfangsbereit (8). Mit der nächsten steigenden Taktflanke kann die externe Bussteuereinrichtung EAIBC somit wieder in den Sendezustand übergehen (9)-(10), wie es entsprechend der anfänglichen Übertragung des ersten Steuerwortes und der ersten Datenpakete beschrieben wurde.

Fig. 5 stellt den Zustandsablauf dar, wenn z.B. die Extern-Schnittstelleneinrichtung IFO einen DMA-Lesevorgang anfordert. Bei dem dargestellten Beispiel wird davon ausgegangen, dass es sich um eine schnelle und durch den Prozessor APX nicht verzögerte oder unterbrochene Übertragung handelt.

Für den Fall, dass mehr als eine solche Anforderung vorliegt, hat die externe Busschnittstelle EAIBC zu entscheiden, welche Anforderung die höchste Priorität hat. Alle anderen werden in eine Warteschlange eingereiht oder zurückgewiesen. Die Nummer bzw. Adresse der Extern-Schnittstelleneinrichtung IFO wird kodiert und zusammen mit der DMA-Anforderung in einem Steuerwort SW über den Schnittstellenbus AIB übertragen (1)-(2). Wenn diese Anforderung als eine Leseanforderung dekodiert wird, wird die interne Bussteuereinrichtung IAIBC wie eine der internen DMA-Einheiten reagieren und sendet eine DMA-Anforderung über den regulären Bus R-BUS zum Prozessorkern APX-KERN. Mit einer entsprechenden Zuteilung legt sie die 32-Datenbit an den regulären Bus R-BUS zwischen Prozessorkern APX-KERN und interner Bussteuereinrichtung IAIBC und löscht die Anforderungsleitungen. Die interne Bussteuereinrichtung IAIBC sendet diese Daten über den Schnittstellenbus AIB zu der externen Bussteuereinrichtung EAIBC. Dabei werden vier Datenpakete DP übertragen, wobei die ersten 16-Datenbit der 32-Datenbit zuerst in einem Datenpaket auf Basis "hohen" Zustand und dann in einem zweiten Datenpaket auf Basis des niedrigen Zustands übertragen werden und danach entsprechend die zweiten 16-Datenbit übertragen werden (5). Wenn die externe Bussteuereinrichtung EAIBC die 32-Datenbit vollständig empfangen hat, wobei die ersten Datenbit gegebenenfalls zwischengespeichert werden, sendet sie diese zu der anfordernden Extern-Schnittstelleneinrichtung IFO. Mit dem Zwischenspeichern der empfangenen Daten löscht die Extern-Schnittstelleneinrichtung IF0 ihre Anforderungsleitungen und die Übertragung wird beendet.

In dem Zustandsdiagramm der Fig. 5 ist ein entsprechender Ablauf dargestellt. Ausgehend von Lesebereitschaft der beiden Bussteuereinrichtungen IAIBC, EAIBC schaltet die externe Bussteuereinrichtung EAIBC nach dem Eintreffen einer DMA-Leseanforderung bei der nächsten ansteigenden Taktflanke von einer der Extern-Schnittstelleneinrichtungen in den nicht-Lesebereitschaftszustand (1). Außerdem legt die externe Bussteuereinrichtung EAIBC das Steuersignal auf der Steuerleitung CTR für eine Taktperiode in den Zustand "hoch" (2). Zusätzlich wird von der externen Bussteuereinrichtung EAIBC eine entsprechende Anforderung erzeugt und als Steuerwort SW über die Datenleitungen DL auf den Schnittstellenbus AIB übertragen. Die interne Bussteuereinrichtung IAIBC empfängt dieses Steuerwort SW und schaltet im Idealfall nach entsprechender Weiterleitung an den Prozessorkern APX-KERN, bereits eine halbe Taktperiode später mit der nächsten abfallenden Taktflanke des Taktes CL in den nicht-Lesebereitschaftszustand (3). Daraufhin schaltet die externe Bussteuereinrichtung EAIBC mit vorzugsweise bereits der nächsten ansteigenden Taktflanke des Taktes CL wieder in den Zustand der Empfangsbereitschaft und signalisiert dies durch Hochsetzen des Lesebereitschaftssignals EAIBC-RTR (4). Die interne Bussteuereinrichtung IAIBC kann nunmehr die zwischenzeitlich über den regulären Bus R-BUS von dem Prozessorkern APX-KERN, empfangenen Daten mit den nächsten Takten des Taktes CL an den Datenleitungen DL des Schnittstellenbusses AIB anlegen. Die auf Datenpakete wartende externe Bussteuereinrichtung empfängt diese Datenpakete DL vom Schnittstellenbus AIB und leitet diese an die anfordernde Extern-Schnittstelleneinrichtung IFO weiter (5).

Wenn der Empfangsspeicher der externen Bussteuereinrichtung EAIBC voll ist, signalisiert die externe Bussteuereinrichtung EAIBC dies der internen Bussteuereinrichtung IAIBC durch das Tiefsetzen des Empfangsbereitschaftssignals EAIBC-RTR mit der nächsten ansteigenden Taktflanke des Taktes CL (6). Die interne Bussteuereinrichtung IAIBC stoppt daraufhin das Aussenden der Daten bis zu einer erneuten Empfangsbereitschaft der externen Bussteuereinrichtung EAIBC. Beim vorliegend dargestellten Ausführungsbeispiel schließt die interne Bussteuereinrichtung IAIBC außerdem die Leitung und versetzt sich selber in den Zustand zum Empfang neuer Befehle durch das Hochsetzen des Lesebereitschaftssignals IAIBC-RTR (7). Die externe Bussteuereinrichtung EAIBC hält ihr Lesebereitschaftssignal EAIBC-RTR solange in diesem Zustand (8), zumindest für einen Taktzyklus des Taktes CL im tiefen Zustand, bis der Speicher wieder frei ist oder, wie beim dargestellten Ausführungsbeispiel, eine neue DMA-Anforderung durch die Extern-Schnittstelleneinrichtung IFO oder eine andere externe Schnittstelleneinrichtung IF1 - IF15 bei ihr eintrifft. Daraufhin wird wiederum ein Steuerbefehl CTR auf die Steuerleitung CTRL gesetzt (9) und ein Steuerwort SW an die Datenleitungen DL des Schnittstellenbusses AIB angelegt (10).

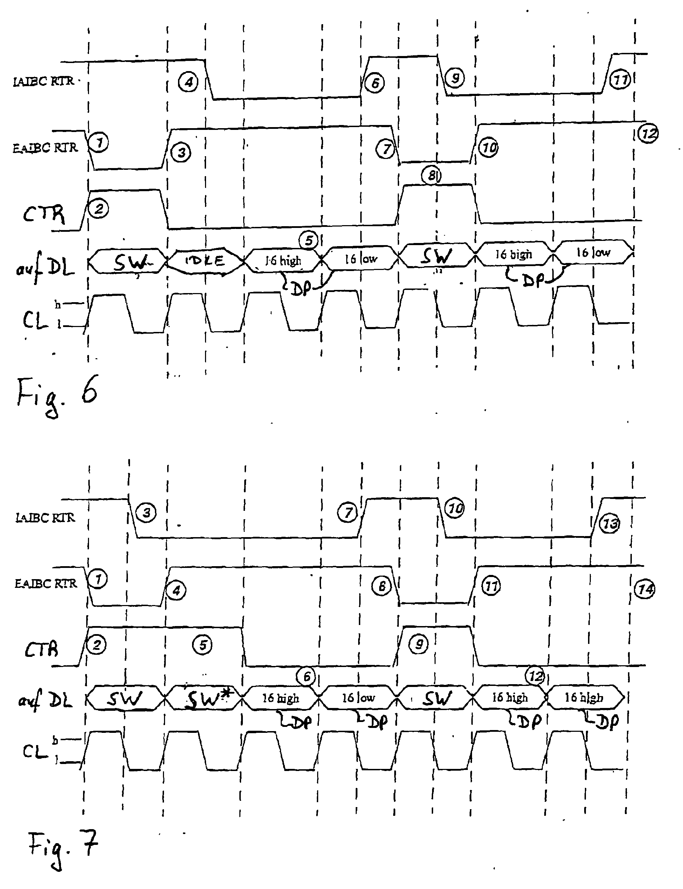

Fig. 6 beschreibt den Fall, bei dem die Extern-Schnittstelleneinrichtung IF0 eine einzelne Datenübertragung anfordert, die jedoch durch den üblichen Bus R-BUS zwischen der internen Bussteuereinrichtung IAIBC und dem Prozessorkern APX-KERN verzögert durchgeführt wird, wenn der Prozessorkern APX-KERN die angeforderten Daten nicht schnell genug bereitstellen kann.

Ausgegangen wird von einer Lesebereitschaft beider Bussteuereinrichtungen IAIBC, EAIBC. Nach Empfang der Datenanforderung von der Extern-Schnittstelleneinrichtung IF0 wechselt die externe Bussteuereinrichtung EAIBC ihr Lesebereitschaftssignal EAIBC-RTR in den nicht-Bereitschaftszustand (1) zu, sendet gleichzeitig ein Steuersignal CTR über die Steuerleitung (2) und sendet einen Befehl bzw. ein Steuerwort SW über die Datenleitungen DL zur internen Bussteuereinrichtung IAIBC. Dies erfolgt, wie bei den vorstehenden Ausführungsbeispielen, zusammen mit der ansteigenden Flanke des Taktes CL. Nach einem Taktzyklus schaltet die externe Bussteuereinrichtung EAIBC wieder in den Lesebereitschaftszustand (3) und wartet auf eine Antwort seitens der internen Bussteuereinrichtung IAIBC, welche die Anforderung zwischenzeitlich über den herkömmlichen Bus R-BUS zum Prozessorkern APX-KERN weitergeleitet hat und ihrerseits auf die Übertragung von Daten zur Weiterleitung wartet. Da die angeforderten Daten vom Prozessorkern APX-KERN erst verzögert bereitgestellt werden, wird das Umschalten der internen Bussteuereinrichtung IAIBC aus dem Lesebereitschaftszustand in den nicht-Lesebereitschaftszustand gegenüber dem Beispiel der Fig. 5 um einen Taktzyklus verzögert, bis die zu übertragenden Daten vorliegen. Erst dann wird das Lesebereitschaftssignal IAIBC-RTR in den Zustand "tief" umgeschaltet (4). Durch diese Verzögerung bleibt die interne Bussteuereinrichtung weiter empfangsbereit, um in der Zwischenzeit weitere Daten oder Anforderungen über den Schnittstellenbus AIB empfangen zu können. Eine Blockierung des Schnittstellenbusses AIB wird somit auf die Zeit reduziert, die tatsächlich für die Übertragung von Steuerworten SW und Datenpaketen DP erforderlich ist. Nach dem Vorliegen der zu übertragenden Daten bzw. Datenpakete DP und Umschalten in den nicht-Lesebereitschaftszustand sendet die interne Bussteuereinrichtung IAIBC die Daten als Datenpakete DP über die Datenleitungen DL, wobei gemäß dem beispielhaften Format in den nächsten Takten wiederum ein oder zwei 16-Bit-Datenpakete übertragen werden.

Optional kann die externe Bussteuereinrichtung EAIBC die Übertragung herunterbremsen oder unterbrechen, falls ihr Empfangsspeicher voll ist, indem das Lesebereitschaftssignal EAIBC-RTR zur Übertragung eines neuen Steuerwortes SW und Aussenden eines Steuersignals bzw. Steuerbefehls CTR über die Steuerleitung CTRL (8) für einen Taktzyklus in den Zustand "tief" versetzt wird (7). Dies ist möglich, da die interne Bussteuereinrichtung IAIBC nach der Übertragung der Datenpakete DP (5) zwischenzeitlich in den Lesebereitschaftszustand (6) gewechselt ist. Dieses Aussenden eines weiteren Steuerwortes SW durch die externe Bussteuereinrichtung wird somit entweder durch das Übergehen der internen Bussteuereinrichtung IAIBC in die Lesebereitschaft (6) oder eine mangelnde Fähigkeit der externen Bussteuereinrichtung EAIBC zum Empfang weiterer Daten ausgelöst. Ein weiterer Grund für das Aussenden eines weiteren Steuerwortes SW kann auch darin bestehen, dass die externe Bussteuereinrichtung EAIBC beispielsweise eine andere, unter Umständen dringendere DMA-Anforderung mit dem Steuerwort SW über den Schnittstellenbus AIB in Richtung des Prozessorkerns APX-KERN zu senden hat.

Nach dem Absenden einer z. B. neuen DMA-Anforderung durch die externe Bussteuereinrichtung EAIBC durch das Aussenden des weiteren Steuerwortes SW (7, 8) und die entsprechende Bereitstellung von Daten bzw. Datenpaketen DP durch den Prozessorkern APX-KERN bei der internen Bussteuereinrichtung IAIBC kann direkt nachfolgend ohne Verzögerung die Übertragung der weiteren angeforderten Daten bzw. Datenpakete DP über den Schnittstellenbus AIB zur externen Bussteuereinrichtung EAIBC durchgeführt werden (9, 10, 11, 12). Dies wird durchgeführt, wie dies bereits anhand Fig. 5 beschrieben wurde. Auch bei diesem Ausführungsbeispiel bleibt die externe Bussteuereinrichtung EAIBC nach dem Aussenden der DMA-Anforderung bzw. des entsprechenden Steuerwortes SW (7, 8) sofort wieder lesebereit (10), um die dringend erwarteten Daten DP umgehend empfangen und nach dem Ende des Sendevorgangs über den Schnittstellenbus AIB (11) an die anfordernde Extern-Schnittstelleneinrichtung IFO weiterleiten zu können (12).

Fig. 7 zeigt ein Ausführungsbeispiel für den Ablauf für den Fall, dass eine Extern-Schnittstelleneinrichtung IF0 Daten anfordert, wobei eine schnelle Übertragung durch den Prozessorkern APX-KERN unterbrochen wird. Beim vorliegenden Beispiel sendet die externe Bussteuereinrichtung EAIBC in bereits beschriebener Art und Weise ein erstes Steuerwort SW über den Schnittstellenbus AIB zur internen Bussteuereinrichtung IAIBC. Die internen Bussteuereinrichtung IAIBC dekodiert dieses Steuerwort und fordert vom Prozessorkern APX-KERN über den herkömmlichen Bus R-BUS die seitens der Extern-Schnittstelleneinrichtung IF0 angeforderten Daten an. Bereits nach einem halben Takt kündigt die interne Bussteuereinrichtung IAIBC durch Tiefsetzen des Lesebereitschaftssignals IAIBC-RTR an, dass die Daten bereitstehen und sie auf den Schnittstellenbus AIB zugreifen möchte (1, 2, 3). Die externe Bussteuereinrichtung EAIBC unterbricht das Senden weiterer Daten oder Steuerworte und geht bereits nach einem Taktzyklus in den Lesebereitschaftszustand (4).

Die externe Bussteuereinrichtung erwartet nunmehr die angeforderten Daten auf den Datenleitungen DL. Sie bekommt jedoch von der internen Bussteuereinrichtung IAIBC ein höher priorisiertes Steuerwort SW* über die Datenleitungen DL übertragen (5). Entsprechend dem gewählten Datenformat folgen dann Datenpakete (6) über die Datenleitungen DL des Schnittstellenbusses AIB, welche direkt zu dem höher priorisierten Steuerwort SW* gehören.

Nach dieser Datenübertragung geht die interne Bussteuereinrichtung wieder in den Lesebereitschaftszustand (7). Die externe Bussteuereinrichtung EAIBC überträgt die empfangenen Daten zu einem externen Register oder der entsprechend im Steuerwort SW* angegebenen Extern-Schnittstelleneinrichtung IFO und fordert den Bus erneut an (8, 9). Daraufhin sendet die externe Steuereinrichtung EAIBC die ursprüngliche DMA-Anforderung, welche von der internen Bussteuereinrichtung IAIBC ignoriert wurde, erneut auf den Schnittstellenbus AIB und empfängt daraufhin die angeforderten Daten in bereits vorstehend beschriebener Art und Weise (8-14).

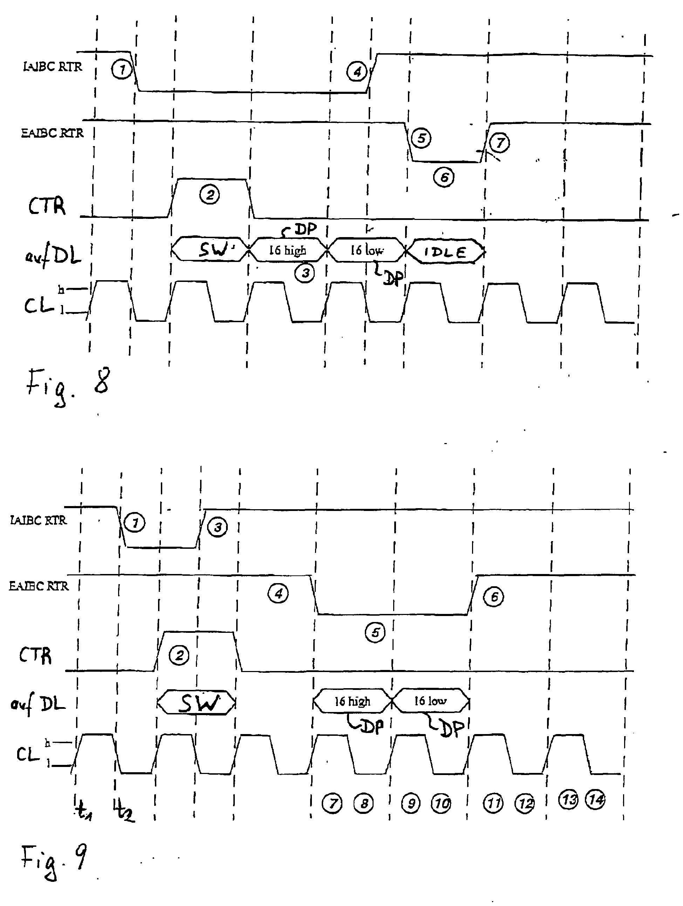

Fig. 8 stellt ein beispielhaftes Zustandsdiagramm für den Fall dar, dass der Prozessor APX Daten aus'seinem Register in ein externes Register schreibt. Die Extern-Schnittstellen IFO - IF15 werden über einen Satz von Registern gesteuert, die als externe Modulregister ext IF 0, ..., ext IF 15 bezeichnet werden und zwischen die externe Bussteuereinrichtung EAIBC und die Extern-Schnittstelleneinrichtungen IF 0 - IF 15 geschaltet sind. Üblicherweise wird auf solche externe Modulregister mittels eines internen üblichen Busses R-BUS zugegriffen. Bei dem vorliegend verwendeten Schnittstellenbus AIB, welcher zwischen den Prozessor APX und die Extern-Schnittstelleneinrichtungen IF 0 - IF 15 geschaltet ist, werden entsprechende Anfragen des Prozessors APX bzw. des Prozessorkerns APX-KERN, durch die interne und die externe Bussteuereinrichtung IAIBC, EAIBC für die Übertragung über den zwischengeschalteten Schnittstellenbus AIB entsprechend übersetzt. Die externe Bussteuereinrichtung EAIBC führt eine Rückübersetzung in das übliche Format durch und überträgt die rückübersetzten Steuersignale und Daten dann an die angeforderten externen Modulregister ext IF 0 - ext IF 15. Die Übertragung über den Schnittstellenbus AIB erfolgt dabei im Zweifelsfall zeitlich gemultiplext.

Die Nummer bzw. Adresse des jeweils anzusprechenden externen Modulregisters ext IF 0 - ext IF 15 wird durch die interne Bussteuereinrichtung IAIBC kodiert und in einem Steuerwort SW über den Schnittstellenbus AIB, gegebenenfalls zusammen mit Informationen über das Datenformat zu der externen Bussteuereinrichtung EAIBC übertragen. Diese führt dann die Rückübersetzung durch. Um das Steuerwort SW erstellen zu können, überprüft die interne Bussteuereinrichtung IAIBC die über den regulären Bus R-BUS vom Prozessorkern APX-KERN erhaltenen Steuersignale, Adress- und Dateninformationen bezüglich der umzusetzenden Informationen, insbesondere auch der Registeradresse und bezüglich der Information, ob es sich um einen Lese- oder Schreibvorgang handelt.

Im Fall eines Schreibzugriffs auf externe Modulregister bzw. Extern-Schnittstelleneinrichtungen IFO - IF15 durch den Prozessor APX wird die Registeradresse entsprechend von der internen Bussteuereinrichtung IAIBC zur externen Bussteuereinrichtung EAIBC zusammen mit der Information übertragen, dass es sich um eine Schreibanforderung handelt. Die externe Bussteuereinrichtung EAIBC dekodiert das über den Schnittstellenbus AIB empfangene Steuerwort SW und setzt die entsprechenden Schreibsteuersignale und Adressen des gewünschten externen Registers auf die entsprechenden Busleitungen zu den externen Modulregistern. Die Übertragung eines ursprünglichen Wortes mit einer Länge von 32 Bit wird für die Übertragung über den Schnittstellenbus AIB im vorliegenden Fall auf zwei Steuerworte und/oder Datenpakete mit je 16-Bit Länge umgesetzt und von der externen Bussteuereinrichtung EAIBC entsprechend als Wort mit einer Länge von 32-Bit rekonstruiert und erst daraufhin zu den externen Modulregistern ext IF 0 - ext IF 15 weitergesendet.

Fig. 8 geht zur Veranschaulichung eines Schreibvorgangs des Prozessors APX auf ein ausgewähltes der externen Modulregister ext IF 0 - ext IF 15 von einem Zustand mit hochgesetzten Lesebereitschaftssignalen IAIBC-RTR, EAIBC-RTR, einem tiefgesetzten Steuersignal CTR und einem kontinuierlichen Bustakt CL des Schnittstellenbusses AIB aus. In einem ersten Schritt setzt die interne Bussteuereinrichtung IAIBC nach dem Empfang einer Schreibanforderung von dem Prozessor APX ihr Lesebereitschaftssignal IAIBC-RTR in den Zustand "tief", und zwar bei der nächsten abfallenden Flanke des Taktes CL (1). Zusammen mit der nächsten ansteigenden Flanke des Taktes CL sendet die interne Steuereinrichtung IAIBC ein Steuersignal CTR auf der Steuerleitung aus und legt ein Steuerwort SW mit den Adressen des gewünschten externen Modulregisters und weiteren Informationen, insbesondere der Schreibinformation, an die Datenleitungen DL des Schnittstellenbusses AIB an (2). Zu Beginn der beiden nächsten Takte werden von der internen Bussteuereinrichtung IAIBC jeweils mit den ansteigenden Taktflanken des Taktes CL Datenpakete DP an die Datenleitungen DL des Schnittstellenbusses angelegt (3). Nach dem Anlegen des letzten zu übertragenden Datenpaketes DP an die Datenleitungen DL des Schnittstellenbusses AIB setzt die interne Bussteuereinrichtung IAIBC ihr Lesebereitschaftssignal IAIBC-RTR wieder in den Zustand "hoch" (4). Sie ist somit wieder lese- bzw. empfangsbereit. Die externe Bussteuereinrichtung EAIBC empfängt bei dieser Vorgehensweise zuerst das Steuerwort SW, wobei die externe Bussteuereinrichtung EAIBC an dem über diese Taktdauer hochgesetzten Steuersignal CTR (2) erkennt, dass die Daten auf den Datenleitungen DL des Schnittstellenbusses AIB ein Steuerwort SW darstellen. Nach einer Analyse bezüglich der Adresse und der Art des Steuerbefehls, vorliegend eines Schreibbefehls, empfängt die externe Bussteuereinrichtung EAIBC bei den nächsten Takten die Datenpakete DP. Da das Steuersignal CTR mit dem Ende der Übertragung des Steuerwortes SW wieder in den Zustand "tief" versetzt wurde, erkennt die externe Bussteuereinrichtung EAIBC, dass es sich bei den auf den Datenleitungen DL des Schnittstellenbusses AIB empfangenen Informationen um Daten handelt, welche zu den Extern-Schnittstelleneinrichtungen IFO - IF15 weiterzuleiten sind. Da die externe Bussteuereinrichtung EAIBC zuvor das Steuerwort SW empfangen und dekodiert hat, legt sie parallel zu der Übertragung der empfangenen Daten an die entsprechenden Steuerleitungen die zugeordneten Adressinformationen und Steuerinformationen an, so dass die weitergeleiteten Daten nur von der gewünschten Extern-Schnittstelleneinrichtung IF0 berücksichtigt werden.

Dargestellt ist auch die Situation, dass die externe Bussteuereinrichtung EAIBC aufgrund eines vollen Empfangs- oder Ausgangsspeichers nicht in der Lage ist, weitere Daten zu empfangen. In diesem Fall setzt die externe Bussteuereinrichtung EAIBC ihr Lesebereitschaftssignal EAIBC-RTR zwischenzeitlich, vorliegend über eine Taktdauer, in den Zustand "tief" (5, 6). Nach einer oder mehreren Taktperioden setzt die externe Bussteuereinrichtung EAIBC das Lesebereitschaftssignal EAIBC-RTR wieder in den Zustand "hoch", nachdem sie aufgrund einer Leerung der Speicher wieder in der Lage zum Empfang neuer Daten ist (7). Die Zeitdauer des Zustands "tief" (6) beträgt dabei ein Vielfaches des Taktzyklus des Taktes CL des Schnittstellenbusses AIB, um Frequenzen höher als der des Taktes CL des Schnittstellenbusses AIB zu vermeiden.

Fig. 9 zeigt ein Zustandsdiagramm für den Fall einer Leseanforderung des Prozessors APX an eine der externen Schnittstelleneinrichtungen IFO - IF15 bzw. das dieser zugeordneten Modulregister ext IF 0 - ext IF 15. Dabei wird die entsprechende Registeradresse, welche die interne Bussteuereinrichtung IAIBC über den regulären Bus R-BUS empfängt, zusammen mit weiteren Informationen, insbesondere der Signalisierung einer Leseanforderung, in ein Steuerwort SW kodiert und über den Schnittstellenbus AIB zur externen Bussteuereinrichtung EAIBC übertragen. Diese dekodiert das empfangene Steuerwort SW und leitet dieses zusammen mit der Leseanforderung an die entsprechende Extern-Schnittstelleneinrichtung IF0 - IF15 bzw. das dieser zugeordneten externe Modulregister weiter. Die Extern-Schnittstelleneinrichtung IFO - IF15 bzw. deren externes Modulregister ext IF 0 - ext IF 15 sendet dann den Inhalt des adressierten Registers zu der externen Busschnittstelleneinrichtung EAIBC. Diese setzt die empfangenen Daten in Datenpakete DP für den Schnittstellenbus AIB um und überträgt diese über die Datenleitungen DL zu der internen Bussteuereinrichtung IAIBC. Diese führt eine Dekodierung durch und leitet die Daten zum Prozessorkern APX-KERN über den regulären Bus R-BUS als 32-Bit Wort weiter.

Dieser Ablauf ist dem Zustandsdiagramm von Fig. 9 entnehmbar. Ausgehend von den Zuständen wie in Fig. 8 wird von der internen Bussteuereinrichtung IAIBC nach Empfang einer entsprechenden Leseanforderung von dem Prozessorkern APX-KERN das Lesebereitschaftssignal EAIBC-RTR zusammen mit der nächsten abfallenden Flanke des Taktes CL des Schnittstellenbusses AIB in den Zustand "tief" gesetzt (1). Bei der nächsten ansteigenden Flanke des Taktes CL wird ein Steuersignal CTR auf die Steuersignalleitung gesetzt und das erzeugte Steuerwort SW an den Datenleitungen DL des Schnittstellenbusses AIB angelegt (2). Bereits mit der nächsten ansteigenden Flanke geht die interne Bussteuereinrichtung IAIBC wieder in Lesebereitschaft (3), um die angeforderten Daten empfangen zu können. Mit der nächsten ansteigenden Flanke des Taktes CL, d. h. nach Übertragung des Steuerwortes SW, wird das Steuersignal CTR wieder in den Zustand "tief" gesetzt, woraufhin die interne Bussteuereinrichtung IAIBC auf den Empfang der Daten oder ggfs. höher priorisierter Steuerworte und Daten von der externen Bussteuereinrichtung EAIBC wartet (4). Nachdem die externe Bussteuereinrichtung EAIBC das Steuerwort SW empfangen und dekodiert an die Extern-Schnittstelleneinrichtungen IF0 - IF15 weitergeleitet hat, legt die angesprochene Extern-Schnittstelleneinrichtung IFO die Daten ihres externen Modulregisters ext IF 0 an die Datenleitungen zu der externen Bussteuereinrichtung EAIBC an. Diese empfängt entsprechend die Daten und setzt diese in ein für den Schnittstellenbus AIB geeignetes Format um. Anschließend setzt die externe Bussteuereinrichtung EAIBC ihr Lesebereitschaftssignal EAIBC-RTR mit der nächsten ansteigenden Flanke des Taktes CL in den Zustand "tief" (4) und legt, solange Daten zu übertragen sind, entsprechende Daten bzw. Datenpakete über die nächsten Takte hinweg jeweils mit der ansteigenden Taktflanke des Taktes CL an die Datenleitungen DL des Schnittstellenbusses AIB an (5). Nach der Übertragung der letzten angeforderten Datenpakete DP geht die externe Bussteuereinrichtung EAIBC wieder in die Lesebereitschaft (6) über. Parallel dazu empfängt die interne Bussteuereinrichtung IAIBC die an den Datenleitungen DL des Schnittstellenbusses AIB angelegten Daten bzw. Datenpakete DP und setzt diese in das geeignete Format für den regulären Bus R-BUS zum Prozessorkern APX-KERN an.

Aus diesem Ausführungsbeispiel ist insbesondere ersichtlich, dass durch eine momentane Betrachtung der Leitungszustände nicht eindeutig festgestellt werden kann, in welchem Zustand sich die Bussteuereinrichtungen IAIBC, EAIBC befinden. Im Zustand (4), in dem die externe Bussteuereinrichtung EAIBC die Leseanforderung an die entsprechende Extern-Schnittstelleneinrichtung IFO weitergeleitet hat und auf die Übertragung der entsprechenden Daten wartet, befinden sich anscheinend sowohl die interne als auch die externe Bussteuereinrichtung IAIBC, EAIBC im untätigen Wartezustand. Dieser Zustand bietet den besonderen Vorteil, dass nachfolgend entweder die angeforderten Daten über den Schnittstellenbus AIB übertragen werden können, wie dies dargestellt ist, oder aber die Möglichkeit für eine der beiden Bussteuereinrichtungen IAIBC oder EAIBC besteht, eine zwischenzeitlich eingetroffene Anforderung mit höherer Priorität über den Schnittstellenbus AIB zu übertragen. Wie dies anhand des Beispiels der Fig. 7 dargestellt ist, würde in dem Fall einer zwischengeschobenen Steueranweisung und Datenübertragung die ursprünglich angeforderte Datenübertragung neu angefordert werden.

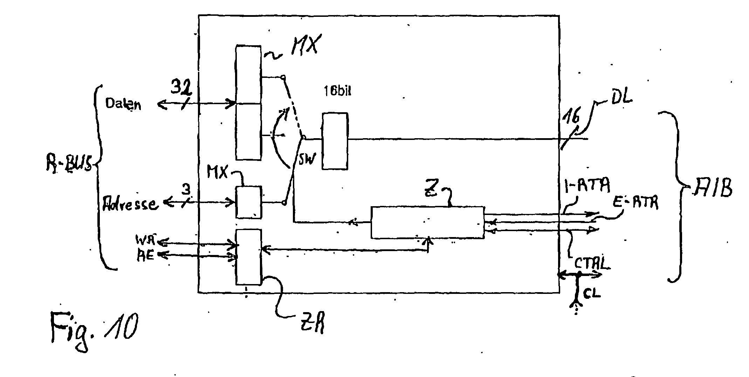

Fig. 10 stellt ein einfaches Ausführungsbeispiel einer Bussteuereinrichtung IAIBC bzw. EAIBC dar. Die Bussteuereinrichtung kann sehr einfach aufgebaut werden und besteht im Wesentlichen aus Multiplexern/Demultiplexern MX, welche eine Anpassung der Datenbreite eines regulären Busses R-BUS an die Datenbreite des Schnittstellenbusses AIB vornehmen. Außerdem weisen die Bussteuereinrichtungen IAIBC, EAIBC eine Zustandsmaschine Z auf, deren Zustand über ein Zustandsregister ZR abfragbar und setzbar ist. Sofern nicht die dritte Steuerleitung eine Taktfunktion mitübernimmt, wird ein externer Takt CL als Takt des Schnittstellenbusses AIB zur Steuerung der einzelnen Komponenten angelegt. Die Zustandsmaschine Z schaltet außerdem wahlweise entweder eingehende Adressdaten und Zustandsinformationen oder zu übertragende eigentliche Daten an die Datenleitungen DL des Schnittstellenbusses AIB. Die Zustandsmaschine Z weist zumindest drei Ausgänge auf, über welche die Steuerinformationen zu der kommunizierenden anderen Bussteuereinrichtung übertragen werden. Das Zustandsregister ZR weist Steuerleitungen WR, RE zum Austausch von insbesondere Schreib- und Leseanforderungen mit dem Prozessor APX-KERN auf.

Ein vorteilhafter Einsatz einer solchen Schaltungsanordnung mit derartigen Bussteuereinrichtungen IAIBC, EAIBC ist insbesondere möglich, um einen Microprozessor APX mit einem Schnittstellenchip ASD zu verbinden. Vorteilhaft ist die Anwendung des Schnittstellenbusses AIB und der Bussteuereinrichtungen IAIBC, EAIBC insbesondere immer dann, wenn es darum geht, einen multimasterfähigen Bus mit geringem controller overhead und wenigen Steuerleitungen zu realisieren.

Die Bussteuereinrichtungen IAIBC, EAIBC weisen vorzugsweise eine Vergleichseinrichtung V auf, welche die Priorität zuvor empfangener Lese- oder Schreibanforderungen mit der Priorität aktuell empfangener Lese- oder Schreibanforderungen vergleicht und in Abhängigkeit von dem Vergleich eine Unterbrechung des aktuellen Datenaustausches zulässt oder nicht zulässt. Vorteilhafterweise weisen die Bussteuereinrichtungen IAIBC, EAIBC einen Detektor (D) auf, welcher einen Datenstau auf weiterführenden Datenleitungen zu Extern-Schnittstelleneinrichtungen (IF0 - IF15) bzw. zum Prozessorkern APX-KERN, also weiterer empfangender Einrichtungen, erkennt und die Datenübertragung bzw. den Datenaustausch während dieser Zeit des Datenstaus verzögert.

Möglich ist auch der Anschluss weiterer Busverbindungen an die Bussteuereinrichtungen IAIBC, EAIBC oder auch das Zwischenschalten solcher noch weiterer Bussteuereinrichtungen in den Verlaufsbereich des Busses. In einem solchen Fall müssten weitere Signalisierungsleitungen vorgesehen werden, jeweils eine zur Signalisierung der Lesebereitschaft der entsprechend zusätzlich eingeführten Bussteuereinrichtung.

Die Bezeichnungen Bussteuereinrichtung IAIBC, EAIBC und Schnittstellenbus AIB dienen lediglich zur Unterscheidung der einzelnen Bauelemente gegenüber den weiteren beschriebenen Bauelementen, insbesondere gegenüber den üblichen Bussen R-BUS, zwischen welche der Schnittstellenbus AIB mit den Bussteuereinrichtungen IAIBC, EAIBC zwischengeschaltet ist. Allgemein kann auch von Steuereinrichtungen IAIBC, EAIBC und einem Bus AIB gesprochen werden. Insbesondere ist auch die Anzahl der Datenleitungen DL nicht auf die Zahl 16 beschränkt. Eine größere oder geringere Anzahl von Datenleitungen DL ist ebenfalls umsetzbar. Je nach Verhältnis der Leitungsanzahl bei einem regulären Bus R-BUS gegenüber dem Schnittstellenbus AIB werden entsprechend Zwischenspeicher und Multiplexer in den Bussteuereinrichtungen IAIBC, EAIBC bereitgestellt.

Der Schnittstellenbus (AIB) weist somit vorteilhafterweise Bussteuereinrichtungen (IAIBC, EAIBC) auf, die zwischen zwei Busse oder Busanschlüsse geschaltet werden. Die Busse oder Busanschlüsse weisen wie übliche Busse jeweils voneinander getrennte Daten-, Adress- und Steuerleitungen auf.

## Patentansprüche

1. Bussystem mit
- einem Bus (AIB) zum Austausch von Daten (DP) über diesen zwischen zwei Busschnittstellen (IAIBC, EAIBC),
- einer ersten Bussteuereinrichtung (IAIBC) und einer zweiten Bussteuereinrichtung (EAIBC) zum Steuern des Austauschs der Daten, wobei die erste Bussteuereinrichtung (IAIBC) der ersten Busschnittstelle zugeordnet ist und die zweite Bussteuereinrichtung (EAIBC) der zweiten Busschnittstelle zugeordnet ist,
- einer ersten und einer zweiten Signalisierungsleitung (I-RTR bzw. E-RTR) zum Signalisieren jeweiliger Zustände der ersten bzw. zweiten Bussteuereinrichtung (IAIBC, EAIBC),
- einer dritten Signalisierungsleitung als Steuerleitung (CTRL) zum Signalisieren eines Datenaustauschs,
- einer Datenleitung oder einem Datenbus (DL) zum Übertragen von Daten (DP) zwischen den beiden Busschnittstellen und
- einer Taktleitung zum Synchronisieren des Bussystems mittels eines Taktes (CL), wobei
- die Bussteuereinrichtungen (IAIBC, EAIBC) als sendende der Bussteuereinrichtungen zum Erzeugen eines Steuerworte (SW), das sich auf nachfolgend zu übertragende Daten (DP) bezieht, und zum Übertragen des Steuerwortes (SW) über die Datenleitung bzw. den Datenbus (DL) ausgebildet sind, und
- die Bussteuereinrichtungen (IAIBC, EAIBC) als empfangende der Bussteuereinrichtungen (EAIBC bzw. IAIBC) zum Empfangen des Steuerwortes (SW) und zum Weiterleiten nachfolgend empfangener Daten entsprechend der im Steuerwort (SW) enthaltenen Steuerinformationen zu entsprechenden angeschlossenen Einrichtungen (IF0, IF1, ..., IF15 bzw. APX-KERN) ausgebildet sind,
**dadurch gekennzeichnet, dass**
die verschiedenen Bussteuereinrichtungen (IAIBC, EAIBC) zur Kollisionsvermeidung nur zu eindeutig verschiedenen Taktzuständen des Taktes (CL) zum Zugriff auf das bidirektional ausgebildete Bussystem ausgebildet sind.

2. Bussystem nach Anspruch 1, bei dem die Bussteuereinrichtungen (IAIBC, EAIBC) zum Übertragen eines Steuersignals (CTR) auf der Steuerleitung (CTRL) immer dann, wenn ein Steuerwort (SW) über die Datenleitung bzw, den Datenbus (DL) übertragen wird, ausgebildet sind.

3. Bussystem nach Anspruch 1 oder 2, bei dem die erste und die zweite Bussteuereinrichtung (IAIBC, EAIBC) ausgebildet sind, Adressdaten, insbesondere Adressdaten eines herkömmlichen Busses (R-BUS) zu codieren und als das Steuerwort (SW) zu übertragen bzw. als das Steuerwort (SW) zu empfangen und als decodierte Adressdaten auszugeben, insbesondere als decodierte Adressdaten auf einen üblichen Bus (R-BUS) auszugeben.

4. Bussystem nach einem vorstehenden Anspruch, bei dem die Bussteuereinrichtungen (IAIBC, EAIBC) ausgebildet sind, Steuerinformationen, insbesondere Schreib- und Leseanforderungen, zu kodieren und in dem Steuerwort (SW) über den Schnittstellenbus (AIB) zu übertragen und empfängerseitig zu dekodieren und als Steueranweisung an externe Einrichtungen, insbesondere an einen üblichen Bus (R-BUS), so lange anzulegen, solange nachfolgend Daten (DP) über die Datenleitung bzw, den Datenbus (DL) übertragen werden.

5. Bussystem nach einem vorstehenden Anspruch, bei dem die Bussteuereinrichtungen (IAIBC, EAIBC) ausgebildet sind, nach dem Empfang eines solchen Steuerwortes (SW) zuvor empfangene Steuerinformationen zu überschreiben.

6. Bussystem nach einem vorstehenden Anspruch, bei dem
die erste und die zweite Bussteuereinrichtung (IAIBC, EAIBC) ausgebildet sind, die Priorität einer empfangenen Anforderung mit der Priorität einer momentanen Übertragung über den Schnittstellenbus in einer Vergleichseinheit (V) zu vergleichen und in Abhängigkeit von dem Vergleichsergebnis eine Unterbrechung der aktuellen Datenübertragung zur nachfolgenden Übertragung höher priorisierter Daten (DP) durchzuführen.

7. Bussystem nach einem vorstehenden Anspruch, bei dem die Steuerleitung zum Signalisieren (CTR) zum bidirektionalen Zugriff durch die Bussteuereinrichtungen (IAIBC, EAIBC) ausgebildet ist.

8. Bussystem nach einem vorstehenden Anspruch, bei dem die erste und die zweite Signalisierungsleitung (I-RTR, E-RTR) entgegengesetzt unidirektional ausgebildet sind und der ersten bzw. der zweiten Bussteuereinrichtung (IAIBC bzw. EAIBC) zugeordnet sind.

9. Bussystem nach einem vorstehenden Anspruch, bei dem die erste und die zweite Signalisierungsleitung (I-RTR, E-RTR) zum Signalisieren des Empfangsbereitschaftszustands bzw, des Nicht-Empfangsbereitschaftszustands und/oder eines gerade ablaufenden Sendebetriebs der zugeordneten Bussteuereinrichtung (IAIBC bzw. EAIBC) ausgebildet sind.

10. Bussystem nach einem der Ansprüche 1 bis 9, bei dem die erste und die zweite Bussteuereinrichtung (IAIBC, EAIBC) zum Zugriff auf die Steuerleitung (CTRL) zum Zeitpunkt des zugeordneten Taktzustands des Taktes (CL) ausgebildet sind.

11. Bussystem nach einem vorstehenden Anspruch, bei dem die Bussteuereinrichtungen (IAIBC, EAIBC) jeweils eine Vergleichseinheit (V) zum Bestimmen und Vergleichen der Priorität aufeinanderfolgend empfangener Steuerworte (SW) bzw. zu verarbeitender Steuerinformationen aufweisen, wobei die Vergleichseinheit (V) in Abhängigkeit von dem Vergleichsergebnis der Prioritäten eine Unterbrechung des aktuellen Datenaustausches zulässt oder nicht zulässt.

12. Bussystem nach einem vorstehenden Anspruch mit einem Detektor (D) zum Ermitteln eines Datenstaus auf weiterführenden Datenleitungen (R-BUS), wobei der Detektor (D) im Fall eines Datenstaus eine durchzuführende Datenübertragung über den Schnittstellenbus (AIB) verzögert oder unterbricht.

13. Bussystem nach einem vorstehenden Anspruch, bei dem an die erste und/oder zweite Bussteuereinrichtung (IAIBC, EAIBC) weitere Busverbindungen (R-BUS) angeschlossen sind.

14. Bussystem nach einem vorstehenden Anspruch, bei dem die erste oder die zweite Bussteuereinrichtung (IAIBC) an einen Prozessorkern (APX-KERN), insbesondere über einen üblichen Bus (R-BUS) an den Prozessorkern angeschlossen ist und die andere, zweite bzw. erste Bussteuereinrichtung (EAIBC) an mindestens zwei Extern-Schnittstelleneinrichtungen (IFO - IF15), insbesondere über einen üblichen Bus (R-BUS) an die Extern-Schnittstelleneinrichtungen angeschlossen ist.

15. Bussystem nach Anspruch 14, bei dem die Datenübertragungsrate über den Bus, insbesondere Schnittstellenbus (AIB), niedriger als die Datenrate über den üblichen Bus (R-BUS) ist.

## Claims

1. Bus system, comprising
- a bus (AIB) for exchanging data (DP) through this bus between two bus interfaces (IAIBC, EAIBC),
- a first bus control device (IAIBC) and a second bus control device (EAIBC) for controlling the exchange of data, wherein the first bus control device (IAIBC) is allocated to the first bus interface, and the second bus control device (EAIBC) is allocated to the second bus interface,
- a first and a second signalling line (I-RTR and E-RTR) for signalling respective states of the first or second bus control device (IAIBC, EAIBC),
- a third signalling line as the control line (CTRL) for signalling an exchange of data,
- a data line or a data bus (DL) for transmitting data (DP) between the two bus interfaces, and
- a clock line for synchronising the bus system by means of a clock (CL), wherein
- the bus control devices (IAIBC, EAIBC) as the transmitting bus control devices are designed to generate a control word (SW) which refers to data (DP) subsequently to be transmitted, and to transmit the control word (SW) through the data line or data bus (DL), and
- the bus control devices (IAIBC, EAIBC) as the receiving bus control devices (EAIBC and IAIBC) are designed to receive the control word (SW), and to relay subsequently received data based on the control information contained in the control word (SW) to corresponding connected devices (IFO, IF1, ..., IF15, or APX-KERN),
**characterised in that**
the various bus control devices (IAIBC, EAIBC) are designed to access the bidirectional bus system only at clearly different clock states of the clock (CL), so as to prevent collisions.

2. Bus system according to Claim 1, in which the bus control devices (IAIBC, EAIBC) are designed to transmit a control signal (CTR) on the control line (CTRL) whenever a control word (SW) is transmitted through the data line or data bus (DL).

3. Bus system according to Claim 1 or 2, in which the first and second bus control devices (IAIBC, EAIBC) are designed to code address data, in particular address data from a conventional bus (R-BUS), and to transmit this as the control word (SW), or to receive this as the control word (SW) and to output it as decoded address data, in particular as decoded address data on a conventional bus (R-BUS).

4. Bus system according to a preceding claim, in which the bus control devices (IAIBC, EAIBC) are designed to code control information, in particular write requests and read requests, and to transmit these in the control word (SW) through the interface bus (AIB) and decode these on the receiver side, and to apply these as a control instruction to external devices, in particular to a conventional bus (R-BUS) for as long as data (DP) are subsequently being transmitted through the data line or data bus (DL).

5. Bus system according to a preceding claim, in which the bus control devices (IAIBC, EAIBC) are designed to overwrite previously received control information after receipt of such a control word (SW).

6. Bus system according to a preceding claim, in which the first and second bus control devices (IAIBC, EAIBC) are designed to compare the priority of a received request with the priority of an instantaneous transmission through the interface bus in a comparison unit (V), and to implement an interrupt of the current data transmission for the subsequent transmission of higher-priority data (DP) depending on the comparison result.

7. Bus system according to a preceding claim, in which the control line is designed for signalling (CTR) for bidirectional access by the bus control devices (IAIBC, EAIBC).

8. Bus system according to a preceding claim, in which the first and second signalling lines (I-RTR, E-RTR) are of opposite unidirectional design, and are allocated respectively to the first and the second bus control device (IAIBC and EAIBC).

9. Bus system according to a preceding claim, in which the first and second signalling lines (I-RTR, E-RTR) are designed to signal the ready-to-receive state or non-ready-to-receive state and/or a just completed transmission operation of the associated bus control device (IAIBC or EAIBC).

10. Bus system according to one of Claims 1 to 9, in which the first and second bus control devices (IAIBC, EAIBC) are designed to access the control line (CTRL) at the instant of the assigned clock state of the clock (CL).

11. Bus system according to a preceding claim, in which the bus control devices (IAIBC, EAIBC) each have a comparison unit (V) for determining and comparing the priority of successively received control words (SW) or of control information to be processed, wherein the comparison unit (V) permits or does not permit an interrupt of the current data exchange depending on the result of comparing the priorities.

12. Bus system according to a preceding claim, comprising a detector (D) for determining data congestion on further-extending data lines (R-BUS), wherein the detector (D) delays or interrupts a data transmission through the interface bus (AIB) in the event of such data congestion.

13. Bus system according to a preceding claim, in which further bus connections (R-BUS) are connected to the first and/or second bus control device (IAIBC, EAIBC).

14. Bus system according to a preceding claim, in which the first or second bus control device (IAIBC) is connected to a processor core (APX-KERN), in particular through a conventional bus (R-BUS) to the processor core, and the other, second or first, bus control device (EAIBC) is connected to at least two external interface devices (IF0-IF15), in particular through a conventional bus (R-BUS) to the external interface devices.

15. Bus system according to Claim 14, in which the data transmission rate through the bus, in particular the interface bus (AIB), is lower than the data rate through the conventional bus (R-BUS).

## Revendications

1. Système de bus comportant :
- un bus (AIB) permettant l'échange de données (DP) entre deux interfaces de bus (IAIBC, EAIBC),
- un premier dispositif de commande de bus (IAIBC) et un deuxième dispositif de commande de bus (EAIBC) pour commander l'échange de données, le premier dispositif de commande de bus (IAIBC) étant alloué à la première interface de bus et le deuxième dispositif de commande de bus (EAIBC) étant alloué à la deuxième interface de bus,
- une première et une deuxième lignes de signalisation (I-RTR ou E-RTR) pour signaler les états respectifs du premier ou du deuxième dispositif de commande de bus (IAIBC, EAIBC),
- une troisième ligne de signalisation en tant que ligne de commande (CTRL) pour signaler un échange de données,
- une ligne de transmission de données ou un bus de données (DL) pour transmettre des données (DM) entre les deux interfaces de bus et
- une ligne d'horloge pour synchroniser le système de bus au moyen d'une horloge (CL),
dans lequel
- les dispositifs de commande de bus (IAIBC, EAIBC) sont des dispositifs de commande de bus émetteurs pour produire un mot de commande (SW), qui se rapporte à des données (DP) à transmettre ensuite, et pour transmettre le mot de commande (SW) par l'intermédiaire de la ligne de transmission de données ou le bus de données (DL), et
- les dispositifs de commande de données (IAIBC, EAIBC) sont des dispositifs de commande de bus récepteurs (EAIBC ou IAIBC) pour recevoir le mot de commande (SW) et pour retransmettre à des dispositifs correspondants branchés (IFO, IF1, ... IF15 ou APX-KERN) des données reçues ensuite conformément aux informations de commande contenues dans le mot de commande (SW),
**caractérisé en ce que**
les différents dispositifs de commande de bus (IAIBC, EAIBC) prévus pour éviter les collisions sont uniquement configurés pour des états nettement différents de l'horloge (CL) permettant l'accès au système de bus bidirectionnel.

2. Système de bus selon la revendication 1,
dans lequel les dispositifs de commande de bus (IAIBC, EAIBC) sont toujours configurés pour transmettre un signal de commande (CTR) sur la ligne de commande (CTRL) lorsque un mot de commande (SW), est transmis par l'intermédiaire de la ligne de transmission de données ou le bus de données (DL).

3. Système de bus selon la revendication 1 ou 2,
dans lequel le premier et le deuxième dispositifs de commande de bus (IAIBC, EAIBC) sont configurés pour coder des données d'adresse, en particulier des données d'adresse d'un bus classique (R-BUS) et pour les transmettre en tant que mot de commande (SW), ou pour les recevoir en tant mot de commande (SW) et les émettre en tant que données d'adresse décodées, en particulier en tant que données d'adresse décodées sur un bus classique (R-BUS).

4. Système de bus selon l'une quelconque des revendications précédentes,
dans lequel les dispositifs de commande de bus (IAIBC, EAIBC) sont configurés pour coder des informations de commande, en particulier des demandes d'écriture et de lecture et les transmettre dans le mot de commande (SW) par l'intermédiaire du bus d'interface (AIB) et pour les décoder côté récepteur et pour les mettre, en tant qu'instruction de commande, sur des dispositifs externes, en particulier sur un bus usuel (R-BUS) jusqu'à ce que des données (DP) soient ensuite transmises par l'intermédiaire de la ligne de transmission de données ou du bus de données (DL).

5. Système de bus selon l'une quelconque des revendications précédentes,
dans lequel les dispositifs de commande de bus (IAIBC, EAIBC) sont configurés pour réécrire des informations de commande reçues préalablement après la réception d'un tel mot de commande (SW).

6. Système de bus selon l'une quelconque des revendications précédentes,
dans lequel le premier et le deuxième dispositifs de commande de bus (IAIBC, EAIBC) sont configurés pour comparer la priorité d'une demande reçue ayant la priorité d'une transmission instantanée par l'intermédiaire du bus d'interface dans une unité de comparaison (V) et, en fonction du résultat de la comparaison, pour procéder à une interruption de la transmission de données en cours afin de transmettre ensuite des données (DP) ayant une priorité plus haute.

7. Système de bus selon l'une quelconque des revendications précédentes,
dans lequel la ligne de commande de signalisation (CTR) est configurée pour l'accès bidirectionnel par les dispositifs de commande de bus (IAIBC, EAIBC).

8. Système de bus selon l'une quelconque des revendications précédentes,
dans lequel la première et la deuxième lignes de signalisation (I-RTR, E-RTR) sont configurées de façon unidirectionnelle opposées et sont allouées au premier ou au deuxième dispositif de commande de bus (IAIBC, ou EAIBC).

9. Système de bus selon l'une quelconque des revendications précédentes,
dans lequel la première et la deuxième lignes de signalisation (I-RTR, E-RTR) sont configurées pour signaler l'état de disponibilité de réception, ou l'état de non-disponibilité de réception et/ou un envoi en cours du dispositif de commande de bus alloué (IAIBC ou EAIBC).

10. Système de bus selon l'une quelconque des revendications 1 à 9,
dans lequel le premier et le deuxième dispositifs de commande de bus (IAIBC, EAIBC) sont configurés pour accéder à la ligne de commande (CTRL) au moment de l'état d'horloge alloué de l'horloge (CL).

11. Système de bus selon l'une quelconque des revendications précédentes,
dans lequel les dispositifs de commande de bus (IAIBC, EAIBC) présentent chacun une unité de comparaison (V) pour déterminer et comparer la priorité de mots de commande (SW) reçus successivement ou d'informations de commande à traiter, l'unité de comparaison (V) autorisant ou n'autorisant pas une interruption de l'échange de données du moment en fonction du résultat de la comparaison des priorités.

12. Système de bus selon l'une quelconque des revendications précédentes comportant un détecteur (D) prévu pour déterminer un encombrement de données sur des lignes de transmission de données (R-BUS) allant plus loin, le détecteur (D) ralentissant ou interrompant une transmission de données à effectuer par l'intermédiaire du bus d'interface (AIB) en cas d'encombrement de données.

13. Système de bus selon l'une quelconque des revendications précédentes,
dans lequel d'autres liaisons de bus (R-BUS) sont raccordées au premier et/ou au deuxième dispositif de commande de bus (IAIBC, EAIBC).

14. Système de bus selon l'une quelconque des revendications précédentes,
dans lequel le premier ou le deuxième dispositif de commande de bus (IAIBC) est branché sur un noyau de processeur (APX-KERN), en particulier par l'intermédiaire d'un bus usuel (R-BUS) sur le noyau de processeur, et l'autre, le deuxième ou le premier dispositif de commande de bus (EAIBC) est branché sur au moins deux dispositifs d'interface de bus externe (IFO - IF15), en particulier par l'intermédiaire d'un bus usuel (R-BUS) sur les dispositifs d'interface externes.

15. Système de bus selon la revendication 14,
dans lequel le taux de transmission de données par l'intermédiaire du bus, en particulier du bus d'interface (AIB), est plus faible que le taux de transmission de données par l'intermédiaire du bus usuel (R-BUS).
